# EUROPÄISCHE PATENTANMELDUNG

(11) **EP 1 524 476 A2**
(43) Veröffentlichungstag der Anmeldung: **20.04.2005**
(21) Anmeldenummer: 04017256.1
(22) Anmeldetag: 22.07.2004
(51) Int. Cl.: F24J 2/26

(54) **Absorber für einen Sonnenkollektor**

(30) Priorität: 16.10.2003 AT 16272003
(71) Anmelder: AKS Doma Schüco Solartechnik GmbH, 6822 Satteins (AT)
(72) Erfinder: Pulides, Marc Dr., 1120 Wien (AT); Bertsch, Ernst, 6820 Frastanz (AT)
(74) Vertreter: Hefel, Herbert, Dipl.-Ing.

(57) **Zusammenfassung**

Bei einem Absorber für einen Sonnenkollektor, mit mindestens einer von einem Aluminiumblech gebildeten Absorberplatte (5) zur Absorption von einfallender Sonnenstrahlung und mindestens einem mit der Absorberplatte (5) verbundenen Rohr (6) aus Kupfer zur Übertragung von vom Absorber aufgenommener Wärme auf ein das Rohr durchströmendes Wärmeträgermedium ist zur Verbindung des mindestens einen Rohres (6) aus Kupfer mit der mindestens einen von einem Aluminiumblech gebildeten Absorberplatte (5) mindestens eine aus Aluminium bestehende Halteleiste (8) an der Absorberplatte (5) festgelegt, wobei die Halteleiste (8) eine in ihrer Längsrichtung verlaufende rinnenförmige Vertiefung (10) aufweist, durch die das Rohr (6) verläuft.

## Beschreibung

Die Erfindung betrifft einen Absorber für einen Sonnenkollektor, mit mindestens einer aus einem Aluminiumblech bestehenden Absorberplatte zur Absorption von einfallender Sonnenstrahlung und mindestens einem mit der Absorberplatte verbundenen Rohr aus Kupfer zur Übertragung von vom Absorber aufgenommener Wärme auf ein das Rohr durchströmendes Wärmeträgermedium.

Ein Sonnenkollektor mit einem Absorber, der eine als Strangpressprofil ausgebildete Absorberplatte aufweist, ist aus der AT 400 196 B bekannt. Die Absorberplatte besitzt mindestens eine Rinne zur Aufnahme eines vom Wärmeträgermedium zu durchströmenden Rohres, in der das Rohr formschlüssig festgelegt ist. Die Rinne der Absorberplatte weist einen ovalen Querschnitt auf und das in diese Rinne eingelegte, vorerst einen runden Querschnitt aufweisende Rohr ist durch mechanische Verformung an die Wand der Rinne angelegt, wobei der Umschließungswinkel des Rohrs annähernd 200 bis 240° beträgt. Der Vorteil dieses Absorbers besteht in der guten Wärmeanbindung des Rohrs an die Absorberplatte, wobei ein guter Wärmeübergang zwischen der Absorberplatte und dem Wärmeträgermedium erreicht wird. Wegen des unrunden Rohres werden auch Turbulenzen in der Strömung des Wärmeträgermediums ausgebildet, was sich wiederum vorteilhaft auf die Wärmeübertragung auswirkt. Ein Nachteil dieses Absorbers ist es, dass die Herstellung der Absorberplatte relativ kostenintensiv ist, wodurch der gesamte Absorber verteuert wird. Außerdem werden bei diesem Absorber Vorbehandlungsmaßnahmen der Absorberplatte, durch welche die Effizienz des Absorbers gesteigert wird (wie weiter unten erläutert wird), aufgrund der die Rinnen zur Aufnahme des Rohrs aufweisenden Form zumindest erschwert.

Es sind weiters Absorber bekannt, welche aus ebenen Metallblechen bestehende Absorberplatten aufweisen, an die die vom Wärmeträgermedium zu durchströmenden Rohre angeschweißt sind. Vorteilhaft an diesen Absorbern ist die Kostengünstigkeit der von einem Blech gebildeten Absorberplatte. Nachteilig bei diesen Absorbern ist es, dass die Wärmeübertragung zwischen der Absorberplatte und dem Rohr schlechter als bei dem aus der AT 400 196 B bekannten Absorber ist. Es besteht hier üblicherweise ein im Wesentlichen nur linienförmiger Kontaktbereich. Ein Vorteil dieser Absorber besteht aber in den erweiterten Vorbehandlungsmöglichkeiten: Auf der dem angeschweißten Rohr gegenüberliegenden Seite sind die Absorberplatten dieser Absorber üblicherweise mit einer solarselektiven Beschichtung versehen. Durch diese Beschichtung soll ein möglichst hoher Absorptionskoeffizient für die eingestrahlte Sonnenstrahlung und ein möglichst niedriger Emissionskoeffizient für die langwellige Wärmestrahlung der Absorberplatte erreicht werden. Bekannt sind beispielsweise PVD(Physical Vapour Deposition) - Beschichtungsverfahren, welche im Vakuum durchzuführen sind. Hierzu werden die Absorberplatten in einem Durchlaufverfahren durch eine gegenüber der Atmosphäre abdichtenden Durchführung in die Vakuumkammer eingebracht, in der Vakuumkammer beschichtet und in der Folge durch eine weitere Durchführung aus der Vakuumkammer herausgeführt. Durch die Ausbildung der Absorberplatte als ebenes Metallblech wird die abgedichtete Durchführung in die und aus der Vakuumkammer ermöglicht.

Bei einer Ausbildung der Absorberplatte in der aus der AT 400 196 B bekannten Form, welche insbesondere Rinnen für die Rohre aufweist, ist dagegen eine abgedichtete Durchführung in eine Vakuumkammer nicht möglich. Auch für andere Vorbehandlungsverfahren wird das Handling erschwert.

Bei den Absorbern, welche aus Metallblechen bestehende Absorberplatten aufweisen, existieren neben Ausbildungen, bei denen sowohl die Absorberplatte als auch das das Wärmeträgermedium führende Rohr aus Kupfer bestehen, auch Absorber der eingangs genannten Art, bei denen die Absorberplatte aus einem Aluminiumblech ausgebildet ist und das durchströmte Rohr aus Kupfer besteht. Der Vorteil dieser letzteren Ausbildung besteht darin, dass aus Aluminiumblech bestehende Absorberplatten kostengünstiger als auch Kupferblech bestehende Absorberplatten sind. Allerdings kann es zu Problemen aufgrund der unterschiedlichen Wärmeausdehnung zwischen der Absorberplatte und den aus Kupfer bestehenden Rohren kommen. Dies kann dazu führen, dass Schweißnähte zwischen Absorberplatte und Rohr reißen können, wobei solche Schweißnähte üblicherweise durch eine Laserschweißung ausgebildet sind. Falls die Schweißnähte stark genug sind, können stattdessen Risse in der Absorberplatte aufgrund der stärkeren Wärmeausdehnung von Kupfer auftreten. Die Langzeittauglichkeit dieser Absorber ist dadurch beeinträchtigt. Eine Ausbildung der Rohre aus Aluminium ist aufgrund der Nachteile von solchen Aluminiumrohren nicht gewünscht (insbesondere sind Aluminiumrohre weniger beständig z. B. gegen Lochfraßkorrosion und gegen eine Abtragung durch die Flüssigkeitsströmung).

Weitere aus einzelnen Strangpressprofilen geformte Absorberplatten sind aus der US 4,086,913 A und der DE 29 44 805 A bekannt, wobei die Wärmeanbindung der Rohre bei diesen Absorbern weniger effizient als bei dem bereits beschriebenen aus der AT 400 196 B bekannten Absorber ist.

Aus der DE 25 22 154 ist weiters ein Absorber bekannt, bei dem die Absorberplatte und das das Wärmeträgermedium führende Rohr einstückig ausgestaltet sind, was u.a. mit einem erheblichen Herstellungsaufwand verbunden ist.

Aus der DE 195 05 857 A1 ist weiters ein Absorber bekannt, durch den die von der Ausbildung der Rohre aus Metall hervorgerufenen Probleme überwunden werden sollen. Als Nachteile von solchen herkömmlichen Absorbern wird angeführt, dass diese nur als vorgefertigtes Bauelement in einer damit verbundenen begrenzten Anzahl von Formaten hergestellt und geliefert werden können und dass dem Wärmeträgermedium ein Frostschutzmittel beigegeben werden muss. Um diese Nachteile zu überwinden, wird in der DE 195 05 857 A1 vorgeschlagen, dass das wärmeträgermediumführende Rohr aus einem elastischen Kunststoffmaterial auszubilden. Das elastische Kunststoffrohr wird hierbei zur Befestigung am Absorber, welche auf der Baustelle durchgeführt werden kann, in ein metallisches Klemmprofil eingeschnappt, was aufgrund der Elastizität des aus Kunststoff bestehenden Rohrs ohne weiteres möglich ist. Das metallische Klemmprofil ist an einer metallischen Absorberplatte festgelegt. Als Metall für das Klemmprofil und für die Absorberplatte ist Kupfer genannt. Kunststoffrohre weisen aber ebenfalls Nachteile auf, so ist ihre Temperaturbeständigkeit schlechter, sodass insbesondere ein Einsatz im Zusammenhang mit solarselektiven Beschichtungen problematisch ist, wobei spezielle hochtemperaturbeständige Kunststoffe verwendet werden müssen, die vergleichsweise teuer sind. Auch ist die Wärmeleitfähigkeit von Kunststoffrohren geringer.

Aufgabe der Erfindung ist es, einen Absorber der eingangs genannten Art bereitzustellen, bei dem neben einem guten Wärmeübergang zwischen der Absorberplatte und dem im Rohr strömenden Wärmeträgermedium und einer kostengünstigen Herstellung, da die Absorberplatte nicht als Strangpressprofil ausgeführt zu werden braucht, auch eine lange Lebensdauer des Absorbers erreicht werden kann. Erfindungsgemäß gelingt dies durch einen Absorber mit den Merkmalen des Patentanspruchs 1.

Erfindungsgemäß wird somit bei einem Absorber, dessen Absorberplatte von einem Aluminiumblech gebildet wird und der mindestens ein Rohr aus Kupfer zur Führung des Wärmeträgermediums aufweist, die Verbindung zwischen dem Rohr aus Kupfer und der aus dem Aluminiumblech bestehenden Absorberplatte über die jeweilige an der Absorberplatte festgelegte Halteleiste aus Aluminium hergestellt. Durch die Anordnung des aus Kupfer bestehenden Rohrs in der Halteleiste wird eine zuverlässige Halterung desselben erreicht, trotz seiner unterschiedlichen Wärmeausdehnung aufgrund des unterschiedlichen Materials. Durch die Ausbildung sowohl der Absorberplatte als auch der Halteleiste aus Aluminium, wodurch eine kostengünstige Ausführung erreicht wird, sind diese Teile in zuverlässiger und langzeittauglicher Weise miteinander verbindbar. Vorteilhafterweise kann dabei die Absorberplatte zumindest im Wesentlichen eben ausgebildet sein, wodurch sie problemlos vorbehandelbar ist, insbesondere mit einer in einer Vakuumkammer aufzubringenden solarselektiven Beschichtung versehbar ist.

Vorteilhafterweise wird die mindestens eine Halteleiste von einem Strangpressprofil aus Aluminium, gebildet, wobei die rinnenförmige Vertiefung einen ovalen Querschnitt aufweisen kann. Das Rohr kann zunächst, wie aus der AT 400 196 B bekannt, vorerst einen runden Querschnitt aufweisen und nach dem Einlegen in die Rinne durch mechanische Verformung an die Wand der rinnenfömigen Vertiefung angelegt werden.

Vorteilhafterweise beträgt der Umschließungswinkel des Rohrs in der rinnenförmigen Vertiefung der Halteleiste mehr als 180°, wobei nicht nur eine mechanische Halterung, sondern auch eine große Wärmeübergangsfläche zwischen der Halteleiste und dem Rohr gewährleistet wird. Ein Umschließungswinkel im Bereich zwischen 190° und 250° ist bevorzugt, wobei der Bereich zwischen 200° und 240° besonders bevorzugt ist.

Vorzugsweise erfolgt bei der Herstellung des Absorbers eine so starke Verpressung des Rohrs mit der Halteleiste, dass trotz der unterschiedlichen Wärmeausdehnungen des aus Kupfer bestehenden Rohrs und der aus Aluminium bestehenden Halteleiste das Rohr in der Halteleiste gegen eine von den unterschiedlichen Wärmeausdehnungen des Rohrs und der Halteleiste bewirkte Achsialverschiebung in der rinnenförmigen Vertiefung gesichert ist.

Weitere Vorteile und Einzelheiten der Erfindung werden im Folgenden anhand der beiliegenden Zeichnung erläutert. In der Zeichnung zeigen:
- Fig. 1: eine schematische perspektivische Darstellung eines Sonnenkollektors mit einem erfindungsgemäßen Absorber, zum Teil aufgerissen;
- Fig. 2: eine schematische Schrägsicht des Absorbers;
- Fig. 3: einen Schnitt entlang der Linie A-A von Fig. 2;
- Fig. 4: einen Fig. 3 entsprechenden Schnitt einer Absorberplatte eines Streifenabsorbers mit an der Absorberplatte angebrachter Halteleiste;
- Fig. 5: eine Abbildung entsprechend Fig. 4, wobei ein Rohr in die rinnenförmige Vertiefung der Halteleiste eingelegt, aber noch nicht verpresst ist;
- Fig. 6: die fertiggestellte Absorbereinheit eines Streifenabsorbers (im Schnitt entsprechend Fig. 3).

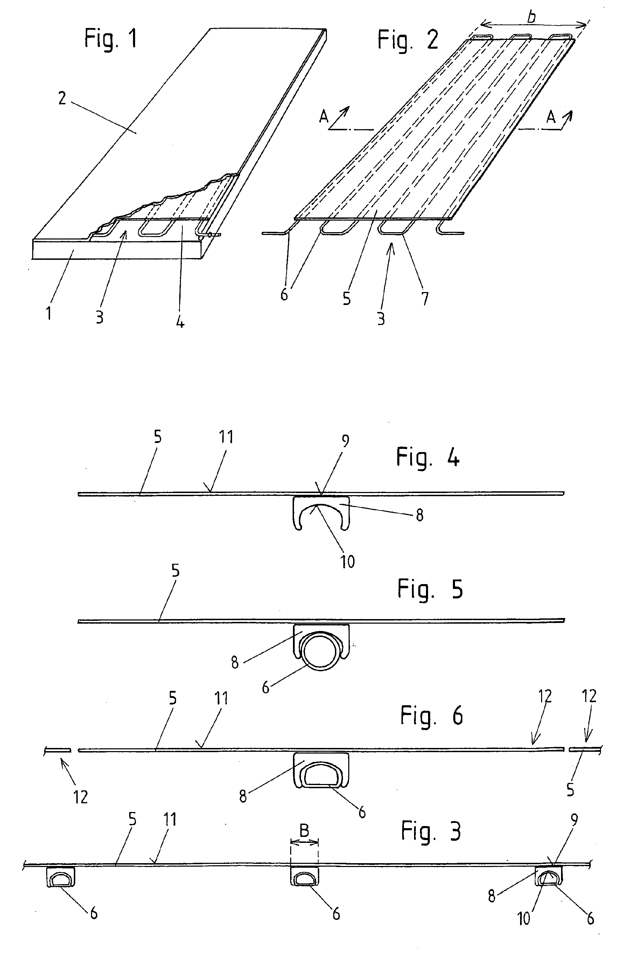

Der in Fig. 1 schematisch dargestellte Sonnenkollektor besitzt ein Kollektorgehäuse, welches einen Rahmen 1 und eine transparente Abdeckung 2 aufweist. Im Kollektorgehäuse ist ein Ausführungsbeispiel eines erfindungsgemäßen Absorbers 3 angeordnet. Hinter dem Absorber liegt eine Isolierschicht 4.

Der Absorber 3 umfasst eine aus einem Aluminiumblech bestehende Absorberplatte 5 und ein ein Wärmeträgermedium führendes Rohr 6 aus Kupfer. Beim Ausführungsbeispiel gemäß den Fig. 1 bis 3 besitzt der Absorber 3 eine einzige Absorberplatte 5, deren Breite b sich im Wesentlichen über die gesamte innere Breite des Absorbergehäuses erstreckt. Das Rohr 6 verläuft hierbei mäanderförmig über die Ausdehnung der Absorberplatte 5, wobei die Bogen 7 über die Ränder der Breitseiten der Absorberplatte 5 vorstehen. Solche Absorber mit einer einzelnen Absorberplatte werden auch als "Plattenabsorber" bezeichnet. Daneben sind auch sogenannte "Streifenabsorber" bekannt, bei denen mehrere nebeneinander liegende Absorberplatten vorhanden sind. Ein solches Ausführungsbeispiel der Erfindung wird weiter unten anhand der Fig. 4 bis 6 beschrieben.

Anstelle der in den Fig. 1 und 2 dargestellten sogenannten "Mäanderverrohrung" ist beispielsweise auch eine sogenannte "Harfenverrohrung" bekannt, und zwar sowohl im Zusammenhang mit Plattenabsorbern als auch Streifenabsorbern. Hier sind die einzelnen Rohrabschnitte nicht über Bogen verbunden, sondern über durchgehende seitliche Verbindungsrohre, zwischen denen die den Bereich der Absorberplatte überquerenden Rohre jeweils verlaufen.

Zur Verbindung des Rohrs 6 mit der Absorberplatte 5 sind an der Unterseite der aus einem Aluminiumblech bestehenden Absorberplatte Halteleisten 8 festgelegt. Hierbei besitzen die Halteleisten 8 Anlageflächen 9, die sich jeweils im Wesentlichen über die gesamte Breite B der Halteleiste 8 erstrecken und mit denen die Halteleisten 8 vollflächig an der Unterseite der Absorberplatte anliegen. Zur Verbindung der aus Aluminium bestehenden Halteleiste 8 mit der aus Aluminium bestehenden Absorberplatte 5 können verschiedenste metallische Verbindungstechniken eingesetzt werden, z.B. Laserschweißen, Ultraschallschweißen, Löten oder Kleben. Zur Erleichterung und/oder Verbesserung der Befestigung einer jeweiligen Halteleiste 8 an der Absorberplatte 5 kann die Halteleiste 8 auch im an die Absorberplatte 5 anschließenden Bereich mit seitlich abstehenden Befestigungsflanschen versehen sein, wobei sich die Anlagefläche 9 wiederum über die gesamte Breite B der Halteleiste 8 erstrecken kann, also auch über die Breite der Befestigungsflansche. Beispielsweise eine Verbindung der Halteleiste 8 an der Absorberplatte 5 mittels Ultraschallschweißen wird durch solche (in den Fig. nicht dargestellte) Befestigungsflansche erleichtert.

Auf ihrer von der Absorberplatte 5 abgewandten Seite weisen die Halteleisten 8 jeweils eine rinnenförmige Vertiefung 10 auf, die in Längsrichtung der Halteleiste 8 verläuft und sich über die gesamte Längsausdehnung der Halteleiste 8 erstreckt. In dieser rinnenförmigen Vertiefung 10 verläuft der jeweilige Abschnitt des Rohrs 6. Der Umschließungswinkel des Rohrs 6 beträgt mehr als 180°, wodurch eine mechanische Verankerung des Rohrs 6 in der Vertiefung 10 bewirkt wird. Bevorzugterweise liegt das Rohr 6 über den gesamten Umschließungswinkel des Rohrs 6 an der Wand der rinnenförmigen Vertiefung 10 an.

Es ist weiters bevorzugt, dass die rinnenförmige Vertiefung wie gezeigt einen ovalen Querschnitt aufweist. Zudem ist es bevorzugt, dass das Rohr 6 im nicht von der rinnenförmigen Vertiefung 10 umschlossenen Abschnitt abgeflacht ist, wobei diese Abflachung in einer Ebene liegt, die parallel zur Ebene der Absorberplatte 5 ist.

Die Halteleisten 8 können günstigerweise von Aluminium-Strangpressprofilen gebildet werden.

Auf der den Halteleisten 8 gegenüberliegenden Seite besitzt die Absorberplatte 5 eine Absorptionsfläche 11, die mit einer solarselektiven Beschichtung versehen ist. Eine solche solarselektive Beschichtung ermöglicht die Aufnahme eines hohen Anteils der kurzwelligen Sonnenstrahlung und deren Umwandlung in Wärme, gleichzeitig wird die Emission (Abstrahlung) der langwelligen Wärmestrahlung des Absorbers beträchtlich reduziert, d.h. durch eine solarselektive Beschichtung wird der Absorptionskoeffizient für Sonnenlicht gegenüber dem unbeschichteten Material erhöht und/oder der Emissionskoeffizient der Wärmestrahlung wird gegenüber dem unbeschichteten Material verringert. Insbesondere kann bei einer solarselektiv beschichteten Absorberplatte ein Emissionskoeffizient der Wärmestrahlung von unter 20% erreicht werden.

Die Herstellung eines erfindungsgemäßen Absorbers wird in der Folge anhand des in den Fig. 4 bis 6 dargestellten Ausführungsbeispiels erläutert. Bei diesem als Streifenabsorber ausgebildeten Absorber sind mehrere Absorbereinheiten 12 vorhanden, von denen in Fig. 6 nur eine Absorbereinheit 12 vollständig dargestellt ist. Eine jeweilige Absorbereinheit weist eine Absorberplatte 5 auf, die in der bereits beschriebenen Weise ausgebildet sein kann. Auf der der Absorptionsfläche 11 gegenüberliegenden Seite ist an einer jeweiligen Absorberplatte 5 eine über die gesamte Länge der Absorberplatte 5 durchgehende Halteleiste 8 angebracht, in der ein vom Wärmeträgermedium zu durchströmendes Rohr 6 verläuft, wobei die Ausbildung der Halteleiste 8 und die Anordnung des Rohrs 6 in der Halteleiste 8 gleich wie beim Ausführungsbeispiel gemäß den Fig. 2 und 3 sein können.

Zur Herstellung des Absorbers wird zunächst die Absorptionsfläche 11 der Absorberplatte 5 mit einer solarselektiven Beschichtung versehen. Beispielsweise kann diese Beschichtung mittels PVD (Physical Vapour Deposition) erfolgen. Hierzu wird die Absorberplatte 5 durch eine Durchführung in eine Vakuumkammer eingebracht, in der die solarselektive Beschichtung im Durchlaufverfahren erfolgt, wobei die Absorberplatte nach der Beschichtung durch eine Durchführung aus der Vakuumkammer herausgeführt wird. Aufgrund der ebenen, plattenförmigen Ausbildung der Absorberplatte ist eine vakuumdichte Durchführung der Platte in die und aus der Vakuumkammer in einfacher Weise möglich. In der Folge wird auf der der Absorptionsfläche gegenüberliegenden Seite die Halteleiste mit einer der bereits genannten Verbindungstechniken angebracht (Fig. 4). In einem weiteren Schritt wird das Rohr 6, das vorerst einen runden Querschnitt aufweist, in diese Rinne eingelegt (Fig. 5) und in der Folge durch mechanische Verformung an die Wand der rinnenförmigen Vertiefung 10 angelegt (Fig. 6). Hierbei wird beim gezeigten Ausführungsbeispiel zudem auch die Abflachung des Rohrs 6 in seinem nicht von der rinnenförmigen Vertiefung umschlossenen Abschnitt angebracht. Zur Fertigstellung des Absorbers werden in der Folge die Rohre 6 der einzelnen Absorbereinheiten 12 miteinander verbunden, und zwar durch Bogen 7 (im Falle einer Mäanderverrohrung) oder durch seitliche Verbindungsleitungen (im Falle einer Harfenverrohrung).

In einem vorteilhaften modifizierten Herstellungsverfahren des Absorbers werden die Schritte der Befestigung der Halteleisten 8 an der Absorberplatte 5 und der Anbindung der Rohre an die Halteleisten 8 vertauscht. Vor der Befestigung der Halteleisten 8 an der Absorberplatte 5 werden also die Rohre 6 in die rinnenförmigen Vertiefungen 10 der Halteleisten 8 eingelegt und es erfolgt die Festlegung der Rohre 6 in den rinnenförmigen Vertiefungen der Halteleisten 8, insbesondere durch das beschriebene Einpressen der Rohre. Erst in der Folge werden die Halteleisten 8 an der Absorberplatte 5 befestigt, wobei hierzu die beschriebenen Techniken eingesetzt werden können.

Unterschiedliche Modifikationen der gezeigten und beschriebenen Ausführungsbeispiele sind denkbar und möglich, ohne den Bereich der Erfindung zu verlassen. So wäre es beispielsweise denkbar und möglich, obwohl weniger bevorzugt, die Rohre 6 nicht in die rinnenförmigen Vertiefungen der Halteleiste einzupressen, sondern die mechanische Verbindung auf eine andere Art und Weise herzustellen. Beispielsweise könnten die die rinnenförmige Vertiefung beidseitig begrenzenden Stege mittels eines Biegeverfahrens an das Rohr angelegt werden. Das Rohr könnte hierbei auch rund ausgebildet sein.

### Legende

### zu den Hinweisziffern:

- 1: Rahmen
- 2: Abdeckung
- 3: Absorber
- 4: Isolierschicht
- 5: Absorberplatte
- 6: Rohr
- 7: Bogen
- 8: Halteleiste
- 9: Anlagefläche
- 10: rinnenförmige Vertiefung
- 11: Absorptionsfläche
- 12: Absorbereinheit

## Patentansprüche

1. Absorber für einen Sonnenkollektor, mit mindestens einer von einem Aluminiumblech gebildeten Absorberplatte (5) zur Absorption von einfallender Sonnenstrahlung und mindestens einem mit der Absorberplatte (5) verbundenen Rohr (6) aus Kupfer zur Übertragung von vom Absorber aufgenommener Wärme auf ein das Rohr durchströmendes Wärmeträgermedium, **dadurch gekennzeichnet, dass** zur Verbindung des mindestens einen Rohres (6) aus Kupfer mit der mindestens einen von einem Aluminiumblech gebildeten Absorberplatte (5) mindestens eine aus Aluminium bestehende Halteleiste (8) an der Absorberplatte (5) festgelegt ist, wobei die Halteleiste (8) wie an sich bekannt eine in ihrer Längsrichtung verlaufende rinnenförmige Vertiefung (10) aufweist, durch die das Rohr (6) verläuft.

2. Absorber nach Anspruch 1, **dadurch gekennzeichnet, dass** die Halteleiste (8) von einem Aluminium-Strangpressprofil gebildet wird.

3. Absorber nach Anspruch 1 oder Anspruch 2, **dadurch gekennzeichnet, dass** die Umschließung des Rohrs (6) in der Halteleiste (8) wie an sich bekannt mehr als 180° beträgt.

4. Absorber nach Anspruch 3, **dadurch gekennzeichnet, dass** die Umschließung des Rohrs (6) von der Halteleiste (8) wie an sich bekannt im Bereich zwischen 190° und 250°, vorzugsweise im Bereich zwischen 200° und 240° liegt.

5. Absorber nach einem der Ansprüche 1 bis 4, **dadurch gekennzeichnet, dass** das Rohr (6) in an sich bekannter Weise über seinen gesamten Umschließungswinkel an der Wand der rinnenförmigen Vertiefung (10) anliegt, wobei vorzugsweise das zunächst einen runden Querschnitt aufweisende Rohr (6) durch mechanische Verformung an die Wand der rinnenförmigen Vertiefung (10) angelegt ist.

6. Absorber nach einem der Ansprüche 1 bis 5, **dadurch gekennzeichnet, dass** die Halteleiste (8) wie an sich bekannt eine über ihre im Wesentlichen gesamte Breite (B) sich erstreckende Anlagefläche (9) aufweist, mit welcher sie vollflächig an der Absorberplatte (5) anliegt.

7. Absorber nach einem der Ansprüche 1 bis 6, **dadurch gekennzeichnet, dass** die Absorberplatte (5) wie an sich bekannt eine mit einer solarselektiven Beschichtung versehene Absorptionsfläche (11) aufweist, wobei der Emissionskoeffizient der Wärmestrahlung vorzugsweise unter 20% liegt.

8. Absorber nach Anspruch 7, **dadurch gekennzeichnet, dass** die Halteleiste (8) an der der Absorptionsfläche (11) gegenüberliegenden Unterseite der Absorberplatte (5) angebracht ist.

9. Absorber nach einem der Ansprüche 1 bis 8, **dadurch gekennzeichnet, dass** die Absorberplatte (5) wie an sich bekannt zumindest im Wesentlichen eben ausgebildet ist.

10. Verfahren zur Herstellung eines mindestens eine aus einem Aluminiumblech bestehende Absorberplatte (5) aufweisenden Absorbers eines Sonnenkollektors, wobei in einem Fertigungsschritt die Absorberplatte (5) im Durchlaufverfahren in einer Vakuumkammer, in welche die Absorberplatte (5) durch eine Durchführung eingebracht wird, mit einer solarselektiven Beschichtung versehen wird und in einem weiteren Fertigungsschritt mindestens ein aus Kupfer bestehendes Rohr (6) zur Übertragung von vom Absorber aufgenommener Wärme auf ein das Rohr (6) durchströmendes Wärmeträgermedium mit der mindestens einen Absorberplatte (5) verbunden wird, **dadurch gekennzeichnet, dass** zur Verbindung des mindestens einen aus Kupfer bestehenden Rohres (6) mit der mindestens einen aus Aluminiumblech bestehenden Absorberplatte (5) mindestens eine aus einem Aluminiumblech bestehende Halteleiste (8) an der Absorberplatte (5) befestigt wird, wobei in der Folge oder in einem vorausgehenden Arbeitsschritt das in eine rinnenförmige Vertiefung (10) in die Halteleiste (8) eingelegte Rohr (6) mit der Halteleiste (8) verbunden wird, vorzugsweise verpresst wird.

11. Verfahren nach Anspruch 10, dass eine so starke Verpressung des Rohres (6) mit der Halteleiste (8) erfolgt, dass das Rohr (6) in der Halteleiste (8) gegen eine von den unterschiedlichen Wärmeausdehnungen des aus Kupfer bestehenden Rohrs (6) und der aus Aluminium bestehenden Halteleiste (8) bewirkten Achsialverschiebung in der rinnenförmigen Vertiefung (10) gesichert ist.
